# EUROPEAN PATENT SPECIFICATION

(11) **EP 2 468 463 B1**
(45) Date of publication and mention of the grant of the patent: **18.06.2014**
(21) Application number: 11189566.0
(22) Date of filing: 17.11.2011
(51) Int. Cl.: B25J 9/16, G06F 9/455, B05B 12/00, F01D 5/28

(54) **Method and device for coating path generation**
Verfahren und Vorrichtung zur Beschichtungspfaderzeugung
Procédé et dispositif de génération de trajectoire de revêtement

(30) Priority: 21.12.2010 US 974233
(43) Date of publication of application: 27.06.2012
(73) Proprietor: Siemens Aktiengesellschaft, 80333 München (DE)
(72) Inventor: Sadovoy, Alexandr, 14059 Berlin (DE); Subramanian, Ramesh, Oviedo, 32765 (US); Thomaidis, Dimitrios, 14197 Berlin (DE)

(56) References cited:
- EP-A1- 1 842 631
- US-A- 5 521 477
- US-B1- 6 256 597

## Description

The present invention relates to a method and a device for generating a motion path for a spray gun for coating a component. The present invention especially relates to a method of an automatic coating path generation for a component with a complicated geometry such as turbine blades and vanes, especially gas turbine blades and vanes.

The thickness distribution is one of the most important parameter of the coatings. The coating thickness defines not only the amount of the sprayed powder, but the functional properties of the coating and as a consequence the properties of the coated component in the production environment. Thus, for example, the thickness distribution of the protective coatings applied to the turbine components define the life time of the whole component in the turbine. The manufacturer specifications, especially for the modern high-temperature protective metallic and thermal barrier ceramic coatings, demand a fulfilment of very strict thickness tolerances of the resulting coating thickness.

Due to the complicity of the surface geometry of the most of the components to be coated the programming of the robotic path to reach the desired thickness tolerances for the final coating on the whole component is not trivial and in the most cases of the turbine components a sophisticated task. In the most cases a use of the manual "teach-in" procedures for the robot programming needs sophisticated operator efforts and not in any cases brings the needed accuracy of the resulting thickness. To simplify a programming procedure and in order to achieve the needed programming accuracy various software tools were developed to enable an offline robot programming (OLP) .

The application of the offline robotic simulation to create a robotic path alternatively to the "teach-in" method became in the last years a state of the art for the material build-up processes such as atmospheric plasma spraying (APS), high velocity oxygen fuel spraying (HVOF), low pressure plasma spraying (LPPS), thermal spray coating deposition, laser cladding, wire arc spraying, cold spraying, sensor deposition or generic painting.

The offline robot programming methods use various software tools for the realistic simulation of the robot motion. The planning of the robot path is based on the CAD data of the component surface geometry and executed by a software operator in the interactive mode. The final verification and development of the resulting coating needs an iterative process of the subsequent coating booth trials, coating thickness analysis and adjustment of the spray path to reach the desired coating distribution on the whole component.

The next step of the simulation tools development is an offline coating thickness simulation. An offline thickness simulation requires a modelling of the primitive spray pattern in form of the spray spot or spray profile. For this reason the physical modelling or pattern database concepts could be used. The realistic modelling of the coating thickness needs to reflect the changes of the pattern in dependence on the variation of the relevant process parameters during the coating process. The thickness simulation could be implemented into the robotic simulation software

The document US 6,256,597 relates to a spray coating simulation for a robotic spray gun assembly which imports a discretized model of an object geometry. Next, the simulator imports a numerically characterized spray pattern file and a robot motion file having a plurality of motion positions, dwell times and orientations defining a motion path of the spray gun. The individual motion positions within the motion file are read and a determination is made as to which portions of the object geometry are visible at each motion position. Next, a coating thickness at each visible portion of the object geometry is computed, based on the specified spray pattern data, the dwell time and the orientation of the robot motion path, for each motion position. Finally, the total coating thickness over the object geometry is calculated.

The document "Numerical Calculation of the Process Parameters, which Optimise the Gas Turbine Blade Coating Process by Thermal Spraying, for given Spray Path, Dr. Martin Balliel, COST 526 - Project CH2 Final Report (ALSTROM)" discloses an offline simulation tool for defining paths of a spray gun and analyse the resulting coating thickness of the blade surface. The surface to be coated is partitioned into subdomains, which can be treated individually. Such subdomains are worked on in sequence with the spray result of all previous subdomains as starting condition for the next subdomain. Moreover, the spray path for each subdomain is parameterised. Both, coating strategy and parameterisation are not finalised and need to be reviewed once more offline.

In the document "Model-based expert system for design and simulation of APS coatings, Florin Ilullu Tifa et al., Journal of Thermal Spray Technology, 128, Vol. 16 (1) 2007, p. 128-139" a way to program the robot trajectory is described, which permits a realistic simulation of the spray gun speed and its inertia. Using simulation software, a trajectory file was built. Moreover, an expert system is described which was developed by combining the spray deposition model with the trajectory. The tasks of the expert system are to assist the user in designing the coatings by selecting the processing parameters and to simulate the coating shapes by integrating the gun trajectory.

The document "Parameter optimization for spray coating method and simulation, H-P. Wang, GE. 1998, Engineering Software 40 (2009) 1078-1086" relates to planning a path-oriented spraycoating process with a time-dependent continuous sequence of spray gun configurations so that a coating of desired thickness is achieved when executing the sequence. A novel approach to solve the planning task, called "geometry-last", is outlined which leads to a more general gun configuration cover problem. The gun configuration cover problem is to find a definite set of spray gun configurations, which minimizes the error between a target coating and the coating induced by simultaneously activating those configurations.

It is a first objective of the present invention to provide an improved method for generating a motion path for a spray gun for coating a component. It is a second objective of the present invention to provide an advantageous device for generating a motion path for the spray gun for coating a component.

The first objective is solved by a method as claimed in claim 1. The second objective is solved by a device as claimed in claim 15. The depending claims define further developments of the invention.

The inventive method for generating a motion path for a spray gun for coating a component comprises the steps of:
a) defining path templates for surface segments of the component,
b) analysing the surface of the surface segments,
c) generating a first motion path,
d) simulating a model of the spray profile,
e) simulating the coating thickness for the motion path based on the simulated model of the spray profile and the generated first motion path based on the simulated thickness and the component data,
f) comparing the simulated coating thickness with predetermined tolerances,
g) in case that the simulated coating thickness does not achieve the predetermined tolerances, generating an adapted motion path,
h) simulating the coating thickness for the motion path based on the simulated model of the spray profile and the generated adapted motion path,
i) repeating the steps f) to h) until the simulated coating thickness achieves the predetermined tolerances.

Generally, the motion path can be a robot motion path. The spray gun can be a robot spray gun. Advantageously the simulation and the generation of the motion path can be performed offline. For example, the first motion path can be generated offline and/or the coating thickness of the motion path can be simulated offline.

The path templates for the surface segments of the component can be defined based on a database of the component. The surface of the surface segments can be analysed based on a database of the components. The first motion path can be generated based on a database of the component. Advantageously, the database of the component comprises CAD (Computer Aided Design) data, preferably in a standardized format.

The present inventive method of automatic coating path generation is based on the ability to analyze a discredited data of the surface geometry, creation of the draft robotic path based on the CAD data, offline coating thickness simulation with the realistic robotic motion, analysis of the simulated thickness distribution and subsequent iterative adjustment of the initial path to reach the desired thickness tolerances on the whole component.

Generic components can be defined according to characteristic features and/or attributes to simplify the generation of the first motion path for the particular component. For example, the components can be divided into groups according to characteristic features or attributes to simplify the generation of the first robotic path for the particular component.

In case of a gas turbine a standard gas turbine blade and/or a standard gas turbine vane can be defined as generic component, for instance. Preferably, for any generic component a standard path template can be defined which represents a set of standard spray path segments corresponding to the characteristic surface areas to be coated, for example with separate spray path blocks.

For a standard blade comprising a root portion with a root platform and an airfoil portion with a pressure side, a suction side and a leading edge the standard path segments may be the pressure side and/or the suction side and/or the leading edge and/or the root platform.

The path template can be adjusted to the dimensions of the particular component based on the database of the component. For example, the motion path can be automatically generated in the same virtual spray booth for similar components with a scaling algorithm.

Furthermore, the position and/or the orientation of a spray gun at a location corresponding to the path template can be correlated to the position and/or the orientation of the component surface, for example based on the particular geometric and/or kinematical spray parameters. Preferably, the position and/or the orientation of a spray gun at a location corresponding to the path template can be correlated to the position and/or the orientation of the component surface based on a particular path offset and/or a particular spray distance and/or a particular spray angle range and/or a particular overspray distance and/or a particular spray gun speed and/or a particular gun positioning accuracy.

Advantageously, a reachability check and/or a collision check for the locations corresponding to the path template are/is carried out. Preferably, the first motion path is generated based on the template with respect to the results of the reachability check and/or the collision check for the locations corresponding to the path template. Using the software functionality for a realistic robot simulation the joint limits for a robot to reach the locations of the template spray path can be checked. In the same time the collision check can be carried out in order to prevent collisions between the spray tools such as a spray gun attached to a robot and the component to be sprayed or with other auxiliary tools in the spaying cell. In the case of a reachability problem or detection of the collision at some locations the geometric spray parameters such as the spray angle or a spray distance can be change to improve the spray path. After the final reachability and collision check the first motion path, especially the first robotic motion path, can be ready for a dry simulation run.

Advantageously, the functionality for a realistic robot motion simulation can be checked based on joint limits for a robot to reach the locations of the path template, for example by using appropriate software. Geometric spray parameters like the spray angle or the spray distance, for example, may be adapted depending on the results of the functionality check and/or the collision check.

For the practical application this adaptive algorithm will allow to set a complete designed robotic path for a definite component as a template. The generation of the path for the components with a similar geometry but with different dimensions can be done by scaling of the relevant path parameters from one component to another taking into account a spatial distortion of the component dimensions.

After the generation of the spray path from the template the corresponding coating thickness distribution can be simulated offline. The thickness simulation may be based on the physical model of the spray profile, which represents a result of the linear motion of the spray gun.

Generally, the thickness distribution on the spray profile can be simulated as a Gaussian distribution. The simulated model of the spray profile may represent a thickness equation describing the thickness distribution in a primitive pattern, for example in dependence on the distance from the pattern centre and/or the process parameters and/or a library of spray patters corresponding to different sets of process parameters. The thickness on the whole effected surface can be simulated based on an accumulative value of the thicknesses applied by a number of spray profiles according to the motion of the spray gun.

Motion path segments effecting the thickness distribution at the area were the simulated coating thickness not achieves the predetermined tolerances can be identified, analysed and automatically adjusted. This can, for example, be achieved by changing the gun speed and/or the path offset and/or the spay angle.

The iterative process of the robotic path adjustment can be performed until the desired coating thickness is achieved on the whole component.

The inventive method provides an automatic coating path generation for the components with complicated geometry such as turbine blades and vanes. The method uses an advanced approach for the robotic path creation based on the simultaneous analysis of the, for example, CAD data of the surface geometry with application of the offline coating thickness simulation for an iterative adjustment of the path to reach the desired coating distribution. Generally, the component surface may be coated by atmospheric plasma spraying (APF), high velocity oxygen fuel spraying (HVOF), low pressure plasma spraying (LPPS), thermal spray coating deposition, laser cladding, wire arc spraying, cold spraying, sensor deposition or generic painting.

The implementation of the offline coating thickness simulation in combination with the offline robotic simulation enables to predict and analyze the thickness distribution mapped on the CAD component surface. Thus, the initial robotic path after the analysis of the simulated thickness distribution can be adjusted by the operator without a subsequent booth trial to verify the coating thickness at the intermediate path development steps. Hence, the combination of the offline robotic simulation with the offline coating thickness simulation enables a semi-virtual process of the spray path development.

The present invention provides an automatic spray path generation based on the component surface geometry from the CAD data and an iterative adjustment of the spray path using the thickness data resulting from the offline coating thickness simulation.

The inventive device for generating a motion path for a spray gun for coating a component comprises:
a) means for defining path templates for surface segments of the component,
b) means for analysing the surface of the surface segments,
c) means for generating a first motion path,
d) means for simulating a model of the spray profile,
e) means for simulating the coating thickness for the motion path based on the simulated model of the spray profile and the generated first motion path,
f) means for comparing the simulated coating thickness with predetermined tolerances,
g) means for generating an adapted motion path based on the simulated thickness and the component data,
h) means for simulating the coating thickness for the motion path based on the simulated model of the spray profile and the generated adapted motion path,
i) means for repeating the steps f) to h) until the simulated coating thickness achieves the predetermined tolerances.

The inventive method can be performed by means of the inventive device. The inventive device has the same advantages as the inventive method.

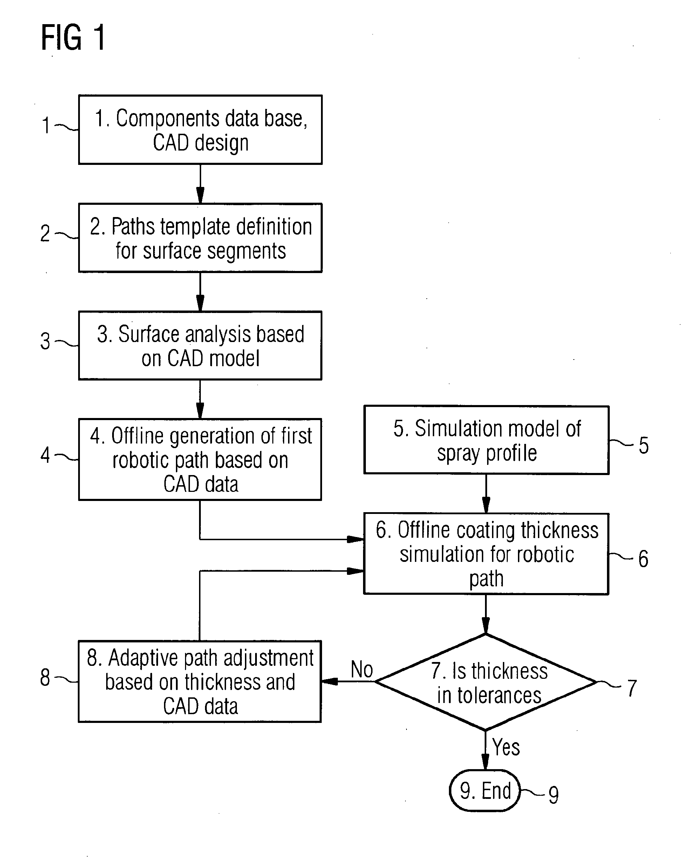

Further features, properties and advantages of the present invention will become clear from the following description of an embodiment in conjunction with the accompanying drawings.
- Figure 1: schematically shows a process diagram of the inventive motion path generation.
- Figure 2: schematically shows a model of a gas turbine blade loaded into a virtual simulation environment.
- Figure 3: schematically shows an automatic motion path generation in the same virtual spray booth for similar components with the scaling algorithm.
- Figure 4: schematically shows an accumulation of the total layer thickness of the coating by the application of single spray profiles.
An embodiment of the present invention will now be described with reference to Figures 1 to 4. The dimensions of the objects in the Figures have been chosen for the sake of clarity and do not necessarily reflect the actual relative dimensions. The described features are advantageous separate or in any combination with each other.

Figure 1 schematically shows a process diagram of an automatic motion path, especially an automatic spray path, generation. In a first step components data base, for example CAD design data, are used to define path templates for surface segments of the components. This is represented in Figure 1 by reference numerals 1 and 2. Then, the surface of the surface segments is analysed based on the CAD model. This is represented by reference numeral 3. A first motion path, for example a first robotic path, is offline generated based on the CAD data. This is represented by reference numeral 4.

A model of a spray profile is simulated and the coating thickness for the motion path, for example for the robotic path, is offline simulated based on the simulated model of the spray profile and the generated first motion path. This is represented in Figure 1 by reference numerals 4, 5 and 6. Afterwards, the simulated coating thickness is compared with predetermined tolerances, which means that it is checked, if the simulated thickness is within the predetermined tolerances. This is represented by reference numeral 7.

If the simulated thickness is within the predetermined tolerances or achieves predetermined tolerances, the simulation is finished. The end of the process is designated by reference numeral 9. If the simulated thickness is not within the predetermined tolerances or does not achieve the predetermined tolerances, then an adaptive motion path is generated or adjusted based on the simulated thickness and the components data, for example the CAD data. The generation or adjustment of the adapted motion path is indicated by reference numeral 8. In a following step the coating thickness for the adapted motion path is simulated again, which means the process runs again through the steps 6 and 7.

The steps 6 to 8 are iteratively repeated until step 9 is achieved, which means that the thickness is within the predetermined tolerances.

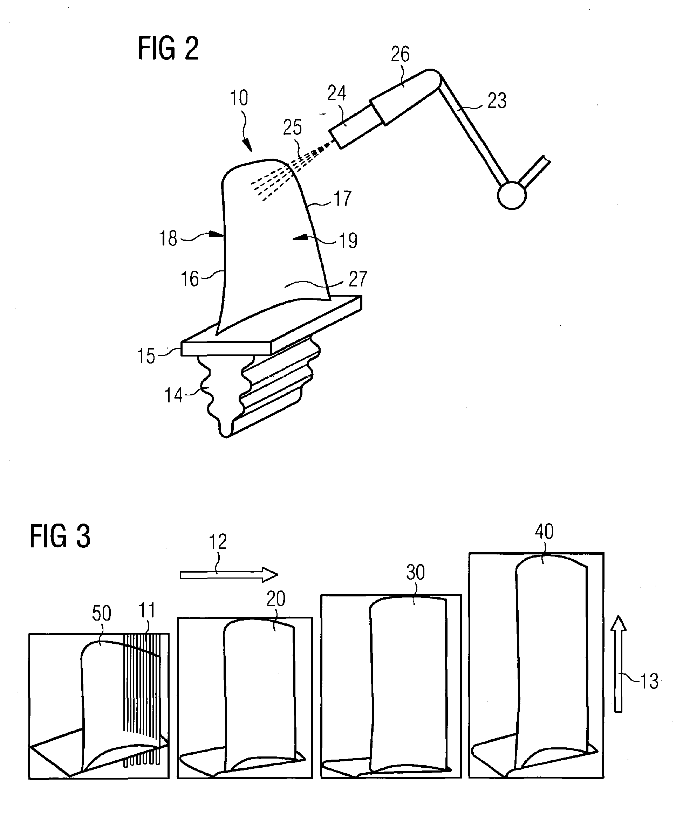

Figure 2 schematically shows a model of a gas turbine blade, for example a CAD model, loaded into a virtual simulation environment. The blade 10 comprises a root portion 14, a platform 15 and an airfoil portion 27. The airfoil portion 27 is connected to the platform 15. The root portion 14 is also connected to the platform 15. The airfoil portion comprises a pressure side 18 and a suction side 19. It further comprises a leading edge 16 and a trailing edge 17.

The airfoil portion 27 is coated with a coating material 25 by means of a spray gun 24. The spray gun 24 is connected to a robot tool. The robot tool comprises a fixation means 26 for connecting the spray gun 24 to the robot. The robot further comprises at least one robot boom 23 to move the spray gun 24 along a motion path.

The steps 1 to 9 of Figure 1 will now be described more in detail.

The components data base 1 can contain available CAD models of the components in a standardized format. The components are divided into groups according to the characteristic features and attributes to simplify the creation of the first robotic path for the particular component. Thus, for example, it can be definite as generic components a standard gas turbine blade and a standard gas turbine vane with all relevant characteristic features of the outer component surface.

For any generic component it is definite a standard path template which represents a standard set of the spray path segments 2 corresponding to the characteristic surface areas to be coated with the separate spray path blocks. For example for a standard blade the pressure and suction sides of the airfoil, the leading edge and separated areas of the root platform could be chosen as the standard path segments.

The CAD model of the component from the data base 1 can be downloaded into a virtual environment of simulation software with the necessary input of the generic type of the component to choose the corresponding path template. The virtual software environment (for example see Figure 2) represents an exact geometrical model of the coating boot including a robot, component fixture and relevant auxiliary tools.

Analyzing the geometrical properties of the component surface 3 from the CAD data the path template is adjusted to the dimensions of the particular component. The positions and orientation of the robotic locations corresponding to the spray path template can be put corresponding to the position and orientation of the component surface. Here an input of the particular geometric and kinematical spray parameters such as path offset, spray distance, spray angles range, overspray distance, spray gun speed. gun positioning accuracy, etc. is needed.

Based on the path template the first robotic path 4 can be created and adjusted with respect to the reachability of the robotic locations. Using the software functionality for a realistic robotic simulation the joint limits for the robot to reach the locations of the template spray path are checked. In the same time a collision check is carried out in order to prevent collisions between the spray tools such as the spray gun 24 attached to the robot and the component 10 to be sprayed or with other auxiliary tools in the spraying cell. In the case of a reachability problem or detection of a collision at some locations the geometric spray parameters such as a spray angle or a spray distance can be changed to improve the spray path. After the final reachability and collision check the first robotic path can be ready for the dry simulation run.

For practical application this adaptive algorithm allows to set a complete designed robotic path for a definite component as a template. The generation of the path for the components with a similar geometry but with different dimensions can be done by scaling of the relevant path parameters from one component to another taking into account a spatial distortion of the component dimensions.

The automatic path generation in the same virtual spray booth for similar components with a scaling algorithm is schematically shown in Figure 3. Figure 3 shows four different vanes 20, 30, 40, 50 with different length in longitudinal direction 13. For the first vane 50 a motion path 11 is generated or is taken from a path library. By means of a scaling algorithm the motion paths for the second vane 20, the third vane 30 and the fourth vane 40 is automatically generated. The scaling direction is designated by reference numeral 12.

The spray path 4 created by the template 3 represents a draft path not ensuring the resulting coating thickness distribution to stay in the desired tolerances for the whole component. In order to enable a prediction of the coating thickness distribution on the whole component an offline coating simulation 6 for a draft robotic path is carried out.

A necessary condition for a coating simulation is an existence of the simulation model 5 for the primitive spray pattern such as a spray spot or a spray profile. The spray spot represents a coating pattern on a flat surface resulting from the spraying from the fixed position of the spray gun at some period of time. The spray profile is a result of the linear motion of the spray gun with constant surface speed. The simulation model can represent a thickness equation describing the thickness distribution in the primitive pattern in dependence on the distance from the pattern centre and the process parameters or the library of the spray patterns corresponding to the different sets of the process parameters or a combination of both. For example a single profile of the thermal spray coatings can with a high accuracy be modelled as a Gaussian distribution.

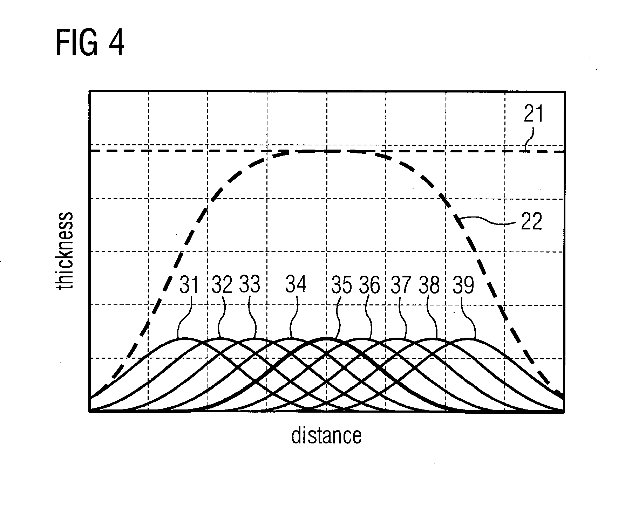

The ability of the most robotic simulation software to compute an accumulative value of the thicknesses applied by the number of primitive patterns according to the motion of the spray gun enables a simulation of the thickness on the whole affected surface. For example an accumulation of the total thickness applied to the flat surface by the sequence of the parallel linear spray paths displaced on some path offset one from each other is presented in Figure 4. A superposition of the profile thicknesses of a large number of single spray paths described by Gaussian curves result in the appearance of the homogeneous coating layer.

Figure 4 schematically shows the accumulation of the total layer thickness 22 of the coating by the application of single spray profiles. The different spray paths are designated by reference numerals 31 to 39. The single Gaussian profiles result in a total coating thickness 22. The predetermined tolerance or desired thickness is designated by reference numeral 21.

The thickness distribution resulting from the draft spray path is automatically analyzed 7. If the thickness values stay in the tolerance range no additional development of the robotic path is needed and the process is completed.

In case of appearance of surface areas with thickness values exceeding the desired tolerance the robotic path is adaptively changed. The robotic path segments affecting the thickness distribution at the areas with not desired thickness are definite, analyzed and automatically adjusted. An implementation of the algorithm of the small variations of the robotic path allows for making changes in the path segments to increase or decrease the thickness values at the definite surface areas. This can be achieved for example by the changes of the gun speed, paths offset, spray angle, etc.

After changing the robotic path, the resulting thickness distribution changes not only at the desired areas but possibly at the other areas affected by the changed path segments. Thus, a subsequent coating simulation is needed to prove the coating distribution on the whole component or in some cases only at the affected areas. The described iterative process of the robotic path adjustment is performed until the desired coating thickness is achieved on the whole component.

## Claims

1. A method for generating a motion path (11) for a spray gun (24) for coating a component (10) comprising the steps of:
a) defining path templates (2) for surface segments of the component (10),
b) analysing the surface of the surface segments (3),
c) generating a first motion path (4),
d) simulating a model of the spray profile (5),
e) simulating the coating thickness for the motion path (6) based on the simulated model of the spray profile (5) and the generated first motion path (4),
f) comparing the simulated coating thickness with predetermined tolerances (7),
g) in case that the simulated coating thickness (7) does not achieve the predetermined tolerances, generating an adapted motion path (8) based on the simulated thickness and the component data,
h) simulating the coating thickness for the motion path based on the simulated model of the spray profile and the generated adapted motion path (6),
i) repeating the steps f) to h) until the simulated coating thickness achieves the predetermined tolerances (9).

2. The method as claimed in claim 1,
wherein the path templates for the surface segments of the component (2) are defined based on a database of the component, and/or the surface of the surface segments is analysed (3) based on a database of the component, and/or the first motion path is generated (4) based on a database of the component.

3. The method as claimed in claim 1 or 2,
wherein generic components are defined according to characteristic features to simplify the generation of the first motion path (4) for the particular component.

4. The method as claimed in claim 3,
wherein for any generic component a standard path template is defined which represents a set of standard spray path segments corresponding to the characteristic surface areas to be coated.

5. The method as claimed in any of the claims 1 to 4,
wherein the position and/or the orientation of a spray gun (24) at a location corresponding to the path template is correlated to the position and/or the orientation of the component surface.

6. The method as claimed in claim 5,
wherein the position and/or the orientation of a spray gun (24) at a location corresponding to the path template is correlated to the position and/or orientation of the component surface based on the particular geometric and/or kinematical spray parameters.

7. The method as claimed in claim 6,
wherein the position and/or the orientation of a spray gun (24) at a location corresponding to the path template is correlated to the position and/or the orientation of the component surface based on a particular path offset and/or a particular spray distance and/or a particular spray angle range and/or a particular overspray distance and/or a particular spray gun speed and/or a particular gun positioning accuracy.

8. The method as claimed in any of the claims 1 to 7,
wherein a reachability check and/or a collision check for the locations corresponding to the path template are/is carried out and the first motion path is generated based on the path template with respect to the results of the reachability check and/or the collision check for the locations corresponding to the path template.

9. The method as claimed in any of the claims 1 to 8,
wherein the functionality for a realistic robot motion simulation is checked based on joint limits for a robot to reach the locations of the path template.

10. The method as claimed in claim 9,
wherein the geometric spray parameters are adapted depending on the results of the functionality check and/or the collision check.

11. The method as claimed in any of the claims 1 to 10,
wherein the model of the spray profile is simulated (5) based on a single profile modelled as a Gaussian distribution.

12. The method as claimed in any of the claims 1 to 11,
wherein the simulated model of the spray profile (5) represents a thickness equation describing the thickness distribution in a primitive pattern.

13. The method as claimed in any of the claims 1 to 12,
wherein the thickness on the whole affected surface is simulated (6) based on an accumulative value of the thicknesses applied by a number of primitive patterns according to the motion of the spray gun (24).

14. The method as claimed in any of the claims 1 to 13,
wherein motion path segments affecting the thickness distribution at the areas where the simulated coating thickness not achieves the predetermined tolerances are identified, analysed and automatically adjusted.

15. A device for generating a motion path (11) for a spray gun (24) for coating a component (10) comprising:
a) means for defining path templates for surface segments of the component (2),
b) means for analysing the surface of the surface segments (3),
c) means for generating a first motion path (4),
d) means for simulating a model of the spray profile (5),
e) means for simulating the coating thickness for the motion path (6) based on the simulated model of the spray profile (5) and the generated first motion path (4),
f) means for comparing the simulated coating thickness with predetermined tolerances (7),
g) means for generating an adapted motion path (8) based on the simulated thickness and the component data,
h) means for simulating the coating thickness for the motion path (6) based on the simulated model of the spray profile (5) and the generated adapted motion path (8),
i) means for repeating the steps f) to h) until the simulated coating thickness achieves the predetermined tolerances (9).

## Patentansprüche

1. Verfahren zur Erzeugung eines Bewegungspfads (11) für eine Spritzpistole (24) zum Beschichten einer Komponente (10), umfassend die folgenden Schritte:
a) Definieren von Pfadmustern (2) für Oberflächensegmente der Komponente (10),
b) Analysieren der Oberfläche der Oberflächensegmente (3),
c) Erzeugen eines ersten Bewegungspfads (4),
d) Simulieren eines Modells des Spritzprofils (5),
e) Simulieren der Beschichtungsdicke für den Bewegungspfad (6) auf Basis des simulierten Modells des Spritzprofils (5) und des erzeugten ersten Bewegungspfads (4),
f) Vergleichen der simulierten Beschichtungsdicke mit vorherbestimmten Toleranzen (7),
g) falls die simulierte Beschichtungsdicke (7) die vorherbestimmten Toleranzen nicht erreicht, Erzeugen eines adaptierten Bewegungspfads (8) auf Basis der simulierten Dicke und der Komponentendaten,
h) Simulieren der Beschichtungsdicke für den Bewegungspfad auf Basis des simulierten Modells des Spritzprofils und des erzeugten adaptierten Bewegungspfads (6),
i) Wiederholen der Schritte f) bis h), bis die simulierte Beschichtungsdicke die vorherbestimmten Toleranzen erreicht (9).

2. Verfahren nach Anspruch 1,
wobei die Pfadmuster für die Oberflächensegmente der Komponente (2) auf Basis einer Datenbank der Komponente definiert sind und/oder die Oberfläche der Oberflächensegmente auf Basis einer Datenbank der Komponente analysiert wird (3) und/oder der erste Bewegungspfad auf Basis einer Datenbank der Komponente erzeugt wird (4).

3. Verfahren nach Anspruch 1 oder 2,
wobei generische Komponenten gemäß charakteristischen Merkmalen definiert werden, um die Erzeugung des ersten Bewegungspfads (4) für die bestimmte Komponente zu erleichtern.

4. Verfahren nach Anspruch 3,
wobei für jedwede generische Komponente ein Standardpfadmuster definiert wird, das einen Satz von Standardspritzpfadsegmenten darstellt, die den zu beschichtenden charakteristischen Oberflächenbereichen entsprechen.

5. Verfahren nach einem der Ansprüche 1 bis 4,
wobei die Position und/oder die Ausrichtung einer Spritzpistole (24) an einer Stelle, die dem Pfadmuster entspricht, mit der Position und/oder der Ausrichtung der Komponentenoberfläche korreliert wird.

6. Verfahren nach Anspruch 5,
wobei die Position und/oder die Ausrichtung einer Spritzpistole (24) an einer Stelle, die dem Pfadmuster entspricht, auf Basis der bestimmten geometrischen und/oder kinematischen Spritzparameter mit der Position und/oder der Ausrichtung der Komponentenoberfläche korreliert wird.

7. Verfahren nach Anspruch 6,
wobei die Position und/oder die Ausrichtung einer Spritzpistole (24) an einer Stelle, die dem Pfadmuster entspricht, auf Basis eines bestimmten Pfadversatzes und/oder eines bestimmten Spritzabstands und/oder eines bestimmten Spritzwinkelbereichs und/oder eines bestimmten Überspritzabstands und/oder einer bestimmten Spritzpistolengeschwindigkeit und/oder einer bestimmten Pistolenpositionierungsgenauigkeit mit der Position und/oder der Ausrichtung der Komponentenoberfläche korreliert wird.

8. Verfahren nach einem der Ansprüche 1 bis 7,
wobei für die Stellen, die dem Pfadmuster entsprechen, eine Erreichbarkeitsprüfung und/oder eine Kollisionsprüfung ausgeführt wird/werden und der erste Bewegungspfad auf Basis des Pfadmusters unter Bezugnahme auf die Ergebnisse der Erreichbarkeitsprüfung und/oder der Kollisionsprüfung für die Stellen, die dem Pfadmuster entsprechen, erzeugt wird.

9. Verfahren nach einem der Ansprüche 1 bis 8,
wobei die Funktionalität für eine realistische Roboterbewegungssimulation auf Basis von Achsgrenzen für einen Roboter, um die Stellen des Pfadmusters zu erreichen, geprüft wird.

10. Verfahren nach Anspruch 9,
wobei die geometrischen Spritzparameter abhängig von den Ergebnissen der Funktionalitätsprüfung und/oder der Kollisionsprüfung angepasst werden.

11. Verfahren nach einem der Ansprüche 1 bis 10,
wobei das Modell des Spritzprofils auf Basis eines einzelnen Profils, das als Gaußsche Verteilung modelliert ist, simuliert wird (5).

12. Verfahren nach einem der Ansprüche 1 bis 11,
wobei das simulierte Modell des Spritzprofils (5) eine Dickengleichung darstellt, die die Dickenverteilung in einem Grundmuster beschreibt.

13. Verfahren nach einem der Ansprüche 1 bis 12,
wobei die Dicke an der gesamten beeinflussten Oberfläche auf Basis eines kumulierten Werts der Dicken, die durch eine Anzahl von Grundmustern gemäß der Bewegung der Spritzpistole (24) aufgebracht werden, simuliert wird (6).

14. Verfahren nach einem der Ansprüche 1 bis 13,
wobei Bewegungspfadsegmente, die die Dickenverteilung in den Bereichen, in denen die simulierte Beschichtungsdicke die vorherbestimmten Toleranzen nicht erreicht, beeinflussen, identifiziert, analysiert und automatisch angepasst werden.

15. Vorrichtung zur Erzeugung eines Bewegungspfads (11) für eine Spritzpistole (24) zum Beschichten einer Komponente (10), umfassend:
a) Mittel, um Pfadmuster für Oberflächensegmente der Komponente zu definieren (2),
b) Mittel, um die Oberfläche der Oberflächensegmente zu analysieren (3),
c) Mittel, um einen ersten Bewegungspfad zu erzeugen (4),
d) Mittel, um ein Modell des Spritzprofils zu simulieren (5),
e) Mittel, um die Beschichtungsdicke für den Bewegungspfad auf Basis des simulierten Modells des Spritzprofils (5) und des erzeugten ersten Bewegungspfads (4) zu simulieren (6),
f) Mittel, um die simulierte Beschichtungsdicke mit vorherbestimmten Toleranzen zu vergleichen (7),
g) Mittel, um auf Basis der simulierten Dicke und der Komponentendaten einen adaptierten Bewegungspfad zu erzeugen (8),
h) Mittel, um die Beschichtungsdicke für den Bewegungspfad auf Basis des simulierten Modells des Spritzprofils (5) und des erzeugten adaptierten Bewegungspfads (8) zu simulieren (6),
i) Mittel, um die Schritte f) bis h) zu wiederholen, bis die simulierte Beschichtungsdicke die vorherbestimmten Toleranzen erreicht (9).

## Revendications

1. Procédé de production d'une trajectoire ( 11 ) de déplacement d'un pistolet ( 24 ) de projection pour revêtir un composant ( 10 ) comprenant les stades de :
a ) définition de modèles ( 2 ) de trajectoire pour des segments de surface du composant ( 10 ),
b ) analyse de la surface des segments ( 3 ) de surface,
c ) production d'une première trajectoire ( 4 ) de déplacement,
d ) simulation d'un modèle du profil ( 5 ) de projection,
e ) simulation de l'épaisseur du revêtement pour la trajectoire ( 6 ) de déplacement sur la base du modèle simulé du profil ( 5 ) de projection et de la première trajectoire ( 4 ) de déplacement produite,
f ) comparaison de l'épaisseur simulée du revêtement à des tolérances ( 7 ) déterminées à l'avance,
g ) dans le cas où l'épaisseur ( 7 ) simulée du revêtement de satisfait pas les tolérances déterminées à l'avance, production d'une trajectoire ( 8 ) de déplacement adaptée sur la base de l'épaisseur simulée et des données du composant,
h ) simulation de l'épaisseur du revêtement pour la trajectoire de déplacement sur la base du modèle simulé du profil de projection et de la trajectoire ( 6 ) de déplacement adaptée qui a été produite,
i ) répétition des stades f ) à h ) jusqu'à ce que l'épaisseur simulée du revêtement satisfasse les tolérances ( 9 ) déterminées à l'avance.

2. Procédé suivant la revendication 1,
dans lequel les modules de trajectoire des segments de surface du composant ( 2 ) sont définis sur la base d'une base de données du composant et/ou la surface des segments de surface est analysée ( 3 ) sur la base d'une base du donnée du composant et/ou la première trajectoire de déplacement est produite ( 4 ) sur la base d'une base de donnée du composant.

3. Procédé suivant la revendication 1 ou 2,
dans lequel on définit des composants génériques suivant des particularités caractéristiques pour simplifier la production de la première trajectoire ( 4 ) de déplacement du composant particulier.

4. Procédé suivant la revendication 3,
dans lequel on définit un modèle normalisé de trajectoire qui représente un jeu de segments normalisé de trajectoire de projection correspondant aux zones de surface caractéristiques à revêtir.

5. Procédé suivant l'une quelconque des revendications 1 à 4,
dans lequel on met la position et/ou l'orientation d'un pistolet ( 24 ) de projection en un emplacement correspondant au modèle de trajectoire en corrélation avec la position et/ou l'orientation de la surface du composant.

6. Procédé suivant la revendication 5,
dans lequel on met la position et/ou l'orientation d'un pistolet ( 24 ) de projection en un emplacement correspondant au modèle de trajectoire en corrélation avec la position et/ou l'orientation de la surface du composant sur la base de paramètres de projection géométriques et/ou cinématiques particuliers.

7. Procédé suivant la revendication 6,
dans lequel on meut la position et/ou l'orientation d'un pistolet ( 24 ) de projection en un emplacement correspondant au modèle de trajectoire en corrélation avec la position et/ou avec l'orientation de la surface du composant sur la base d'un décalage particulier de la trajectoire et/ou d'une distance particulière de projection et/ou d'une plage particulière d'angle de projection et/ou d'une distance particulière de non adhérence de la matière projetée et/ou d'une vitesse particulière du pistolet de projection et/ou d'une précision particulière de positionnement du pistolet.

8. Procédé suivant l'une quelconque des revendications 1 à 7,
dans lequel on effectue un contrôle de l'aptitude à les atteindre et/ou un contrôle de collision pour les emplacements correspondants au modèle de trajectoire et on produit la première trajectoire de déplacement sur la base du modèle de trajectoire en se reportant au résultat du contrôle pour les atteindre et/ou du contrôle de collision pour les emplacements correspondants au modèle de trajectoire.

9. Procédé suivant l'une quelconque des revendications 1 à 8,
dans lequel on contrôle la fonctionnalité d'une simulation réaliste d'un déplacement de robot sur la base de limites d'articulation d'un robot pour atteindre les emplacements du modèle de trajectoire.

10. Procédé suivant la revendication 9,
dans lequel on adapte les paramètres géométriques de projection en fonction des résultats du contrôle de fonctionnalité et/ou du contrôle de collision.

11. Procédé suivant l'une quelconques des revendications 1 à 10,
dans lequel on simule ( 5 ) le modèle du profil de projection sur la base d'un profil unique modélisé sous la forme d'une distribution de Gauss.

12. Procédé suivant l'une quelconque des revendications 1 à 11,
dans lequel le modèle simulé du profil ( 5 ) de projection représente une équation d'épaisseur décrivant la répartition d'épaisseur dans une configuration primitive.

13. Procédé suivant l'une quelconque des revendications 1 à 12,
dans lequel on simule ( 6 ) l'épaisseur sur toute la surface affectée sur la base d'une valeur cumulée les épaisseurs appliquées par un certain nombre de configurations primitives en fonction du déplacement du pistolet ( 24 ) de projection.

14. Procédé suivant l'une quelconque des revendications 1 à 13,
dans lequel on identifie, analyse et ajuste automatiquement des segments de la trajectoire de déplacement affectant la répartition d'épaisseur aux endroits où l'épaisseur simulée de revêtement ne satisfait pas les tolérances déterminées à l'avance.

15. Dispositif de production d'une trajectoire ( 11 ) de déplacement d'un pistolet ( 24 ) de projection pour revêtir un composant ( 10 ) comprenant :
a ) des moyens de définition de modèles de trajectoire de segments de surface du composant ( 2 ),
b ) des moyens d'analyse de la surface des segments ( 3 ) de surface,
c ) des moyens de production d'une première trajectoire ( 4 ) de déplacement,
d ) des moyens de simulation d'un modèle du profil ( 5 ) de projection,
e ) des moyens de simulation de l'épaisseur du revêtement pour la trajectoire ( 6 ) de déplacement sur la base du modèle simulé du profil ( 5 ) de projection et de la première trajectoire ( 4 ) de déplacement produite,
f ) des moyens de comparaison de l'épaisseur simulé du revêtement à des tolérances ( 7 ) déterminées à l'avance,
g ) des moyens de production d'une trajectoire ( 8 ) de déplacement ( 8 ) adaptée sur la base de l'épaisseur simulée et des données du composant,
h ) des moyens de simulation de l'épaisseur du revêtement pour la trajectoire ( 6 ) de déplacement sur la base du modèle simulé du profil ( 5 ) de projection et de la trajectoire ( 8 ) de déplacement adaptée qui est produite,
i ) des moyens de répétition des stades f ) à h ) jusqu'à ce que l'épaisseur simulée du revêtement satisfasse les tolérances ( 9 ) déterminées à l'avance.
